# EUROPEAN PATENT SPECIFICATION

(11) **EP 0 682 479 B1**
(45) Date of publication and mention of the grant of the patent: **04.10.2000**
(21) Application number: 94905124.7
(22) Date of filing: 27.01.1994
(51) Int. Cl.: A23L 1/22

(54) **A SPICE/SWEETENER COMPOSITION AND A PROCESS FOR MANUFACTURING IT**
GEWÜRZ/SÜSSMITTELZUSAMMENSETZUNG UND VERFAHREN ZUR HERSTELLUNG
COMPOSITION AROMATISANTE/EDULCORANTE ET SON PROCEDE DE PREPARATION

(30) Priority: 27.01.1993 FI 930347
(43) Date of publication of application: 22.11.1995
(73) Proprietor: Sohkar Oy, 02150 Espoo (FI)
(72) Inventor: YLI-KYYNY, Mauri, FIN-00960 Helsinki (FI); TIAINEN Ilkka, FIN-00200 Helsinki (FI); ORAVAINEN, Juha, FIN-31600 Jokioinen (FI)
(74) Representative: Hansen, Bernd, Dr. Dipl.-Chem.
(86) International application number: FI9400037
(87) International publication number: WO9416578

(56) References cited:
- CH-A- 581 956
- DE-B- 1 171 717
- FI-B- 43 254
- US-A- 2 929 723
- CHEMICAL ABSTRACTS, Volume 98, No. 7, 14 February 1983 (14.02.83), (Columbus, Ohio, USA), page 538, the Abstract No. 52226w; & JP,B,57 028 280, (Mitsui Sugar Co., Ltd.) 15 June 1982 (15.06.82).

## Description

The present invention relates to a spice/sweetener composition wherein a powdered spice, for example cinnamon, ginger or clove, and a crystalline sweetener, such as a sugar or sugar alcohol, are bonded together as a free-flowing and dust-free product. A further object of the invention is a process for manufacturing such a spice/sweetener composition.

Finely powdered spices are used both in households and in the food industry for many purposes. The dusting and poor flowability of a powdered spice cause problems. A powdered spice is difficult to sprinkle and to dose evenly. In many applications, a powdered spice is used simultaneously with sugar. The problems mentioned above pertain even to such applications.

Cinnamon and granulated sugar are generally used in bakeries and as sprinkling powders, and they are very often used simultaneously. As regards cinnamon, in particular, it is generally known that it dusts and is difficult to sprinkle. These properties complicate the use of cinnamon in household baking and as topping on yoghurt, for example; in the baking industry they cause variation in quality and increase the expenses. In addition, cinnamon and sugar used as icing on bakery products do not always adhere to the surface of a product in a satisfactory manner.

There have been attempts to solve the problems relating to dusting and sprinkling by using water for bonding powdered cinnamon and granulated sugar to each other. These attempts have, however, not been successful.

Chemical Abstracts, Volume 98, No. 7, 14 February 1983, Columbus, Ohio, USA, page 538, THE ABSTRACT No 52226w, JP, A, 5728280 (Mitsui Sugar Co., Ltd.) 15 June 1982 disclose granules consisting of sucrose and cinnamon. Said granules, which are made by cristallisation from a solution containing cinnamon and sucrose and by subsequent crushing of the crystals, do not contain fat for bonding together the sucrose and cinnamon particles.

It is known to add a small amount of fat to crystalline sugar in such a manner that a thin layer of fat is formed on the sugar-crystals. The manufacture of a sugar product of this kind is disclosed, for example, in the product brochure 'WITOCAN^{R} - For the Manufacture of "Decorating Sugar" ' by Dynamit Nobel AG. According to the brochure, the product can be made of icing sugar or crystallized sugar by adding 5 parts by weight of the melted fat WITOCAN^{R}, which is a special kind of hard vegetable fat, to 95 parts by weight of sugar heated to a temperature of about 35 to 40°C while the mixture is stirred. The fat should have approximately the same temperature as the sugar. Thereafter the product is cooled while the stirring is continued. According to the brochure, a moisture-repellent sugar product is thus obtained, said product being almost insoluble in cold water and suitable for use for decorating purposes on bakery products and other food products.

Fat/sugar compositions have been developed for different purposes. It is known, for example, that addition of fat improves the adherence of sugar on bakery products. These compositions do not, however, solve the above-mentioned problems pertaining to the use of a powdered spice.

The object of the present invention is therefore to provide a spice/sweetener composition which is dust-free, free-flowing, of even quality, and thus easy to dose both by sprinkling and by other means. The taste and other properties of the composition must naturally also be suitable for use in foodstuffs.

This object is achieved with a spice/sweetener composition of the invention, which is characterized in that it consists of granules comprising a crystalline sweetener and a powdered spice bonded together with a fat which is solid at room temperature.

A further object of the invention is a process for manufacturing the above-mentioned spice/sweetener composition, said process being characterized in that a finely powdered spice is mixed with a crystalline sweetener, the obtained mixture is heated to a temperature in which the fat to be used is in a melted state, the melted fat, which is solid at room temperature, is sprayed with vigorous stirring onto the mixture in an amount of from 0.5 to 5% by weight of the total amount of the composition to be manufactured, and the obtained mixture is cooled to room temperature with continuous stirring. A further object of the present invention is to provide a spice/sweetener composition to be used as table-sugar or for icing a bakery product.

The crystalline sweetener in the composition of the present invention may be selected from crystalline sugars such as sucrose and fructose, sugar alcohols such as lactitol and maltitol, and mixtures of sugar alcohols such as isomalt.

For instance, a crystalline sucrose with an average particle size of from 0.30 to 0.70mm, preferably from 0.36 to 0.40mm, and a coefficient of variation of from 25 to 45% is suitable for use in the manufacture of the spice/sweetener composition of the invention.

Known fats are used in the manufacture of the spice/sugar composition of the invention. The fat must be suitable for use in a food product, odourless, and with a neutral taste. The melting range of the fat must be such that the fat is solid at room temperature but melts rapidly at the temperature prevailing in the mouth. A vegetable fat with a melting range of from 32 to 40°C, preferably from 33 to 35°C, is preferred.

Natural spices may contain active substances, e.g. enzymes, that may have an effect on the shelf life of the fat. Thus, for instance, it has been found that the fat used in compositions containing cinnamon should be substantially free from lauric acid in order for the taste of the composition to remain unchanged during storage and heating. In this specification and the claims, the expression "free from lauric acid" means that no lauric acid is present in free or esterified form". Examples of fats substantially free from lauric acid are the commercially available fats KASTEX (manufactured by Unilever), and SP 36 and RP 35 (manufactured by Raisio).

The amount of the powdered spice to be used is not critical in carrying out the invention. Preferably the spice is present in an amount of 3 to 15% based on the total weight of the composition; the spice may, however, be used in an amount of up to 30% by weight of the composition, depending on the desired strength of the flavour and the intended use of the composition.

In the process of the invention, the heated mixture of a sweetener and a spice is sprayed to an efficient mechanical or fluidized-bed mixer, to which melted fat is added by spraying it onto the spice/sweetener mixture while the mixture is stirred vigorously. Thereafter the product is cooled with continuous stirring to a temperature of from 20 to 25°C or stabilized to room temperature in a separate step.

The spice/sweetener composition of the invention is ready for use as such, pleasant and homogeneous in structure and appearance, and it enables easy simultaneous dosage of a spice and sweetener. It may be used as table sugar or for icing a bakery product. On account of high flowability, the product is also easy to sprinkle. Furthermore, it has the advantageous properties of being dust-free and having improved moisture-repellency due to the addition of fat.

A preferred embodiment of the invention is a cinnamon/sugar composition comprising from 3 to 15% by weight of powdered cinnamon bonded to granulated sugar with a vegetable fat substantially free from lauric acid and having a melting range of from 32 to 40°C in an amount of from 0.5 to 5% by weight of the total amount of the composition. According to the invention, this composition is manufactured preferably by mixing powdered cinnamon with granulated sugar, heating the mixture to 35 to 40°C, spraying melted vegetable fat, preferably having a temperature of from 35 to 50°C, onto the mixture with vigorous stirring, and cooling the mixture to room temperature for packing.

Typical applications of the cinnamon/sugar composition of the invention are the use as filling, icing or topping for bakery products, and the use as a sprinkling powder on porridge and yoghurt, for example.

### Example 1

500 kg of a crystalline sugar with an average particle size of from 0.36 to 0.40mm and a coefficient of variation of from 27 to 33%, and 45 kg of finely powdered cinnamon were heated to a temperature of 35°C and inserted in a Lödige FKM 1600D mixer. While the cinnamon/sugar mixture was stirred vigorously, 5 kg of melted WITOCAN^{R} HS fat (manufactured by Dynamit Nobel AG, Troisdorf, Germany), heated to a temperature of 45°C, was added thereto by spraying. Said fat is a vegetable fat which is based on coconut and palm kernel oil and has a solid fat content of about 96% at 20°C and a melting range of from 33 to 35°C. The stirring was continued for five minutes at 41°C, whereafter the product was cooled to room temperature first in the mixer and finally in provisional storage. The cooling/stabilization time was two days before packing.

The composition obtained consisted of small particles of even size and was free-flowing and dust-free. It also had an even colour and pleasant taste and mouth-feel. In a storage test at room temperature, however, off-flavours occurred within two months, in applications during heating even earlier.

### Example 2

The procedure of Example 1 was repeated, but WITOCAN^{R} was replaced by KASTEX (manufacturer Unilever).

The obtained composition possessed the same properties as the composition of Example 1 in other respects except that the taste of this composition remained unchanged even during heating and storage.

### Examples 3 and 4

The procedure of Example 1 was repeated, but WITOCAN^{R} was replaced by the fat SP 36 in Example 3 and by the fat RP 35 in Example 4 (both of the fats manufactured by Raisio).

The properties of the obtained compositions were essentially the same as those of the composition obtained in Example 2.

### Example 5

Following the procedure of Example 1, a ginger/sugar composition was prepared. The percentages of the ingredients, based on the total weight of the composition, were as follows:

| | |
|---|---|
| Granulated sugar (average particle size 0.36-0.40mm) | 94% |
| Powdered ginger | 4,5% |
| Vegetable fat (KASTEX) | 1,5% |

The obtained composition possessed essentially the same advantageous properties as the compositions of Examples 2 to 4.

### Example 6

Following the procedure of Example 1, a liquorice/sugar composition was prepared. The percentages of the ingredients, based on the total weight of the composition, based on the total weight of the composition, were as follows:

| | |
|---|---|
| Granulated sugar (average particle size 0.36-0.40mm) | 88% |
| Liquorice powder | 10% |
| Vegetable fat (KASTEX) | 2% |

The obtained composition possessed essentially the same advantageous properties as the compositions of Examples 2 to 4.

## Claims

1. A spice/sweetener composition, **characterized** in that it consists of granules comprising a crystalline sweetener and a powdered spice bonded together with a fat which is solid at room temperature.

2. A spice/sweetener composition according to claim 1, **characterized** in that the crystalline sweetener is selected from the group consisting of sucrose, fructose, lactitol, maltitol and isomalt.

3. A spice/sweetener composition according to claim 2, **characterized** in that the crystalline sweetener is sucrose.

4. A spice/sweetener composition according to claim 3, **characterized** in that the sucrose has an average particle size of from 0.30 to 0.70mm, preferably from 0.36 to 0.40mm, and a coefficient of variation of from 25 to 45%.

5. A spice/sweetener composition according to any one of claims 1 to 4, **characterized** in that the fat is a vegetable fat with a melting range of from about 32 to 40°C.

6. A spice/sweetener composition according to any one of claims 1 to 5, **characterized** in that the spice is cinnamon.

7. A spice/sweetener composition according to claim 6, **characterized** in that it contains from 3 to 30% by weight of cinnamon.

8. A spice/sweetener composition according to any one of claims 1 to 7, **characterized** in that said fat is free from lauric acid.

9. A process for manufacturing a spice/sweetener composition, **characterized** in that a finely powdered spice is mixed with a crystalline sweetener, the obtained mixture is heated to a temperature in which the fat to be used is in a melted state, the melted fat, which is solid at room temperature, is sprayed with vigorous stirring onto the mixture in an amount of from 0.5 to 5% by weight of the total amount of the composition to be manufactured, and the obtained mixture is cooled to room temperature with continuous stirring.

10. A process according to claim 9, **characterized** in that the crystalline sweetener is selected from the group consisting of sucrose, fructose, lactitol, maltitol and isomalt.

11. A process according to claim 10, **characterized** in that the crystalline sweetener is sucrose.

12. A process according to claim 11, **characterized** in that the sucrose has an average particle size of from 0.30 to 0.70mm, preferably from 0.36 to 0.40mm, and a coefficient of variation of from 25 to 45%.

13. A process according to any one of claims 9 to 12, **characterized** in that the fat is a vegetable fat with a melting range of from about 32 to about 40°C.

14. A process according to any one of claims 9 to 13, **characterized** in that the spice is cinnamon.

15. A process according to claim 14, **characterized** in that cinnamon is used in an amount of from 3 to 15% by weight of the total amount of the composition.

16. A process according to any one of claims 9 to 15, **characterized** in that said fat is free from lauric acid.

17. The use of a spice/sweetener composition according to any one of claims 1 to 8 as table-sugar.

18. The use of a spice/sweetener composition according to any one of claims 1 to 8 for icing a bakery product.

## Patentansprüche

1. Gewürz/Süßungsmittelzusammensetzung, die dadurch gekennzeichnet ist, daß sie aus Körnern besteht, die ein kristallines Süßungsmittel und ein pulverförmiges Gewürz umfassen, zusammen gebunden mit einem Fett, das bei Raumtemperatur fest ist.

2. Gewürz/Süßungsmittelzusammensetzung nach Anspruch 1, die dadurch gekennzeichnet ist, daß das kristalline Süßungsmittel aus einer Gruppe ausgewählt ist, die aus Saccharose, Fructose, Lactit, Maltit und Isomalt besteht.

3. Gewürz/Süßungsmittelzusammensetzung nach Anspruch 2, die dadurch gekennzeichnet ist, daß das kristalline Süßungsmittel Saccharose ist.

4. Gewürz/Süßungsmittelzusammensetzung nach Anspruch 3, die dadurch gekennzeichnet ist, daß die Saccharose eine mittlere Teilchengröße von 0,30 bis 0,70 mm, bevorzugt von 0,36 bis 0,40 mm besitzt und einen Variationskoeffizienten von 25 bis 45 %.

5. Gewürz/Süßungsmittelzusammensetzung nach einem der Ansprüche 1 bis 4, die dadurch gekennzeichnet ist, daß das Fett ein Pflanzenfett mit einem Schmelzpunktbereich von 32 bis 40°C ist.

6. Gewürz/Süßungsmittelzusammensetzung nach einem der Ansprüche 1 bis 5, die dadurch gekennzeichnet ist, daß das Gewürz Zimt ist.

7. Gewürz/Süßungsmittelzusammensetzung nach Anspruch 6, die dadurch gekennzeichnet ist, daß sie 3 bis 30 Gew.% Zimt enthält.

8. Gewürz/Süßungsmittelzusammensetzung nach einem der Ansprüche 1 bis 7, die dadurch gekennzeichnet ist, daß besagtes Fett frei von Laurinsäure ist.

9. Verfahren zur Herstellung einer Gewürz/Süßungsmittelzusammensetzung, das dadurch gekennzeichnet ist, daß ein fein pulverisiertes Gewürz mit einem kristallinen Süßungsmittel gemischt wird, die erhaltene Mischung auf eine Temperatur erwärmt wird, bei der das zu verwendende Fett im geschmolzenen Zustand vorliegt, das geschmolzene Fett, das bei Raumtemperatur fest ist, unter heftigem Rühren auf die Mischung in einer Menge von 0,5 bis 5 Gew.% der Gesamtmenge der Zusammensetzung, die hergestellt werden soll, gesprüht wird, und die erhaltene Mischung unter ständigem Rühren auf Raumtemperatur abgekühlt wird.

10. Verfahren nach Anspruch 9, das dadurch gekennzeichnet ist, daß das kristalline Süßungsmittel aus der Gruppe ausgewählt ist, die aus Saccharose, Fructose, Lactit, Maltit und Isomalt besteht.

11. Verfahren nach Anspruch 10, das dadurch gekennzeichnet ist, daß das kristalline Süßungsmittel Saccharose ist.

12. Verfahren nach Anspruch 11, das dadurch gekennzeichnet ist, daß die Saccharose eine durchschnittliche Teilchengröße von 0,30 bis 0,70 mm, bevorzugt von 0,36 bis 0,40 mm aufweist und einen Variationskoeffizienten von 25 bis 45 %.

13. Verfahren nach einem der Ansprüche 9 bis 12, das dadurch gekennzeichnet ist, daß das Fett ein Pflanzenfett mit einem Schmelzpunktbereich von 32 bis 40°C ist.

14. Verfahren nach einem der Ansprüche 9 bis 13, das dadurch gekennzeichnet ist, daß das Gewürz Zimt ist.

15. Verfahren nach Anspruch 14, das dadurch gekennzeichnet ist, daß Zimt in einer Menge von 3 bis 15 Gew.% der Gesamtmenge der Zusammensetzung verwendet wird.

16. Verfahren nach einem der Ansprüche 9 bis 15, das dadurch gekennzeichnet ist, daß besagtes Fett frei von Laurinsäure ist.

17. Verwendung der Gewürz/Süßungsmittelzusammensetzung nach einem der Ansprüche 1 bis 8 als Tafelzucker.

18. Verwendung der Gewürz/Süßungsmittelzusammensetzung nach einem der Ansprüche 1 bis 8 zum Glasieren von Backwaren.

## Revendications

1. Composition d'épice/édulcorant, caractérisée en ce qu'elle est constituée de granulés comprenant un édulcorant cristallin et une épice en poudre liés ensemble avec une graisse qui est solide à la température ambiante.

2. Composition d'épice/édulcorant selon la revendication 1, caractérisée en ce que l'édulcorant cristallin est choisi dans le groupe constitué par le saccharose, le fructose, le lactitol, le maltitol et l'isomalt.

3. Composition d'épice/édulcorant selon la revendication 2, caractérisée en ce que l'édulcorant cristallin est le saccharose.

4. Composition d'épice/édulcorant selon la revendication 3, caractérisée en ce que le saccharose a une granulométrie moyenne de 0,30 à 0,70 mm, de préférence de 0,36 à 0,40 mm, et un coefficient de variation de 25 à 45 %.

5. Composition d'épice/édulcorant selon l'une quelconque des revendications 1 à 4, caractérisée en ce que la graisse est une graisse végétale qui a une plage de fusion d'environ 32 à 40°C.

6. Composition d'épice/édulcorant selon l'une quelconque des revendications 1 à 5, caractérisée en ce que l'épice est la cannelle.

7. Composition d'épice/édulcorant selon la revendication 6, caractérisée en ce qu'elle contient de 3 à 30 % en poids de cannelle.

8. Composition d'épice/édulcorant selon l'une quelconque des revendications 1 à 7, caractérisée en ce que ladite graisse est exempte d'acide laurique.

9. Procédé pour fabriquer une composition d'épice/édulcorant, caractérisé en ce qu'une épice finement pulvérisée est mélangée avec un édulcorant cristallin, le mélange obtenu est chauffé à une température à laquelle la graisse à utiliser est dans un état fondu, la graisse fondue, qui est solide à la température ambiante, est pulvérisée sous vigoureuse agitation sur le mélange en une quantité de 0,5 à 5 % en poids de la quantité totale de la composition à fabriquer, et le mélange obtenu est ramené à la température ambiante sous agitation continue.

10. Procédé selon la revendication 9, caractérisé en ce que l'édulcorant cristallin est choisi dans le groupe constitué par le saccharose, le fructose, le lactitol, le maltitol et l'isomalt.

11. Procédé selon la revendication 10, caractérisé en ce que l'édulcorant cristallin est le saccharose.

12. Procédé selon la revendication 11, caractérisé en ce que le saccharose a une granulométrie moyenne de 0,30 à 0,70 mm, de préférence de 0,36 à 0,40 mm, et un coefficient de variation de 25 à 45 %.

13. Procédé selon l'une quelconque des revendications 9 à 12, caractérisé en ce que la graisse est une graisse végétale avec une plage de fusion d'environ 32 à 40°C.

14. Procédé selon l'une quelconque des revendications 9 à 13, caractérisé en ce que l'épice est la cannelle.

15. Procédé selon la revendication 14, caractérisé en ce que la cannelle est utilisée en une quantité de 3 à 15 % en poids de la quantité totale de la composition.

16. Procédé selon l'une quelconque des revendications 9 à 15, caractérisé en ce que ladite graisse est exempte d'acide laurique.

17. Utilisation d'une composition d'épice/édulcorant selon l'une quelconque des revendications 1 à 8, en tant que sucre de table.

18. Utilisation d'une composition d'épice/édulcorant selon l'une quelconque des revendications 1 à 8, pour le glaçage d'un produit de boulangerie.
